# EUROPEAN PATENT APPLICATION

(11) **EP 4 697 454 A1**
(43) Date of publication of application: **18.02.2026**
(21) Application number: 25173445.5
(22) Date of filing: 30.04.2025
(51) Int. Cl.: H01M 10/613, H01M 10/6556

(54) **BATTERY CELL MODULE ASSEMBLY**

(30) Priority: 12.08.2024 KR 20240107492
(71) Applicant: Hyundai Mobis Co., Ltd., Gangnam-gu Seoul 06141 (KR)
(72) Inventor: CHOI, Wook Han, 16891 Yongin-si (KR); KIM, Hwa Sung, 16891 Yongin-si (KR); SONG, Jun Ho, 16891 Yongin-si (KR); LEE, Ji Eun, 16891 Yongin-si (KR)
(74) Representative: Vossius & Partner Patentanwälte Rechtsanwälte mbB

(57) **Abstract**

The present disclosure provides a battery cell module assembly including a lower case including a lower cooling flow passage, a plurality of battery modules seated in a cell area of the lower case, a side case disposed along a periphery of the cell area and coupled to the lower case, an upper case configured to cover the plurality of battery modules and an upper surface of the side case while including an upper cooling flow passage, a lower coolant tube connected to the lower cooling flow passage over a tube area of the lower case disposed outside the side case, and an upper coolant tube connected to the upper cooling flow passage under a tube area of the upper case disposed outside the side case.

## Description

This application claims the benefit of Korean Patent Application No. 10-2024-0107492, filed on August 12, 2024, in the Korean Intellectual Property Office.

### BACKGROUND

### Field

The present disclosure relates to a battery cell module assembly.

### Description of the Related Art

In order to cope with environmental preservation issues and fossil fuel depletion around the world, development of eco-friendly vehicles such as hybrid electric vehicles (HEVs), plug-in hybrid electric vehicles (PHEVs), fuel cell electric vehicles (FCEVs), and electric vehicles (EVs) is being highlighted.

In an electric vehicle, a secondary battery, which is repeatedly rechargeable and reusable, is used. In accordance with technology advancement, such a secondary battery is being advanced to have increased specific energy, power density, and lifespan.

A battery cell, which is a basic unit of a battery, is formed to have a cylindrical shape, a pouch shape, or a square shape. A battery module is formed as an assembly in which a plurality of battery cells is accommodated in a frame. A battery cell module assembly is configured by disposing a plurality of battery modules in a frame and, as such, may be mounted to an electric vehicle or the like requiring a high-capacity battery to be used as a power source.

Battery cells having different sizes and different shapes, for example, lithium-ion batteries, are assembled to form battery cell module assemblies having different configurations. In the case of a battery cell module assembly for a vehicle, many battery cells, for example, hundreds of battery cells or thousands of battery cells, may be often stacked in order to satisfy power and capacity required in the battery cell module assembly.

Such a battery cell module assembly may have a fire potential caused by foreign matter introduced from the outside and, as such, should have watertight performance. A connection portion of a case in the battery cell module assembly may include a sealing member in order to prevent introduction of foreign matter including moisture.

Since a battery module operates in a state in which a plurality of battery cells is densely disposed, heat may be generated in the battery module. Accordingly, a cooling flow passage, through which coolant passes, is provided for cooling of the battery cells. Technology for designing a cooling structure in a water-cooled type battery cell module assembly is a factor determining performance and lifespan of batteries. For high performance and high efficiency, accordingly, technology for maximizing the area of the battery cells contacting the cooling structure is needed.

In conventional cases, a cooling system in which a cooling flow passage is disposed at only one surface of a battery cell module assembly is mainly used. In such a case, however, it is difficult to obtain a required cooling efficiency. When a cooling flow passage is added to the other surface of the battery cell module assembly, the watertight performance of the battery cell module assembly may be degraded and, as such, there may be a problem such as leakage of coolant. Although there is another cooling system in which cooling fins or the like are added to increase a contact area, in order to enhance cooling efficiency, this system still has a limitation in enhancing the cooling efficiency.

### SUMMARY

The present disclosure is to address at least the above-mentioned problems and/or disadvantages and to provide at least the advantages described below. Accordingly, an aspect of the present disclosure is to provide a battery cell module assembly having a double-sided cooling structure which is capable of reducing a risk of leakage of coolant.

Additional aspects will be set forth in part in the description which follows and, in part, will be apparent from the description, or may be learned by practice of the presented embodiments of the disclosure.

In a general aspect of the disclosure, a battery cell module assembly includes: a lower case comprising a lower cooling flow passage; a plurality of battery modules seated in a cell area of the lower case; a side case disposed along a periphery of the cell area and coupled to the lower case; an upper case configured to cover the plurality of battery modules and an upper surface of the side case, the upper case comprising an upper cooling flow passage; a lower coolant tube connected to the lower cooling flow passage over a tube area of the lower case disposed outside the side case; and an upper coolant tube connected to the upper cooling flow passage under a tube area of the upper case disposed outside the side case, wherein coolant flows through the lower cooling flow passage and the upper cooling flow passage to control a temperature deviation in the plurality of battery modules.

The battery cell module assembly may further include: a first sealing part disposed between the upper case and the side case and configured to seal the cell area; and a second sealing part disposed between the upper case and the side case while being disposed at a periphery of the upper coolant tube.

The side case may include: an extension part extending to support a lower portion of the tube area of the upper case; and a tube hole formed at the extension part and configured to enable the upper coolant tube to pass therethrough, wherein the second sealing part may be disposed at a periphery of the tube hole.

The extension part may include a condensate discharge hole formed between the tube hole and the second sealing part.

The upper case may include an edge part flush with a lower surface thereof without forming a step, wherein the first sealing part may contact the edge part of the upper case.

The upper case may include an upper cover configured to cover an upper portion of the upper cooling flow passage, wherein the first sealing part may be disposed between the upper cover and the side case, and wherein the second sealing part may be disposed between the upper cooling flow passage and the side case.

The upper case may include an upper electronic part disposed between the upper cooling flow passage and the upper cover, wherein the upper case may include a control part mounted at the electronic part.

The battery cell module assembly may further include a connecting sealing part configured to interconnect the first sealing part and the second sealing part.

The upper coolant tube may be connected to the lower coolant tube, wherein the battery cell module assembly may further include a tube sealing part configured to seal connection portions of the upper coolant tube and the lower coolant tube.

The tube area of the upper case and the tube area of the lower case may be disposed to face each other in a vertical direction.

The tube area of the lower case may protrude from the cell area.

In another general aspect of the disclosure, a battery cell module assembly of a vehicle, includes: a lower case including a lower cooling flow passage; one or more battery modules seated in a cell area of the lower case; a side case disposed along a periphery of the cell area of the lower case, and coupled to the lower case; an upper case configured to cover the one or more battery modules and an upper surface of the side case, the upper case including an upper cooling flow passage; a lower coolant tube connected to the lower cooling flow passage over a tube area of the lower case disposed outside the side case; an upper coolant tube connected to the upper cooling flow passage under a tube area of the upper case disposed outside the side case; a heat exchanger connected to the lower coolant tube and the upper coolant tube; and a controller configured to control coolant flow in the heat exchanger, the lower cooling flow passage and the upper cooling flow passage to control a temperature deviation among the one or more battery modules.

The battery cell module assembly may further include: a first sealing part disposed between the upper case and the side case and configured to seal the cell area; and a second sealing part disposed between the upper case and the side case while being disposed at a periphery of the upper coolant tube.

The side case may include: an extension part extending to support a lower portion of the tube area of the upper case; and a tube hole formed at the extension part and configured to enable the upper coolant tube to pass therethrough, wherein the second sealing part may be disposed at a periphery of the tube hole.

The upper case may include an edge part flush with a lower surface thereof without forming a step, wherein the first sealing part may contact the edge part of the upper case.

The upper case may include an upper cover configured to cover an upper portion of the upper cooling flow passage, wherein the first sealing part may be disposed between the upper cover and the side case, and wherein the second sealing part may be disposed between the upper cooling flow passage and the side case.

The battery cell module assembly may further include a connecting sealing part configured to interconnect the first sealing part and the second sealing part.

The upper coolant tube may be connected to the lower coolant tube, wherein the battery cell module assembly may further include a tube sealing part configured to seal connection portions of the upper coolant tube and the lower coolant tube.

The battery cell module assembly of the present disclosure may reduce a temperature deviation among the battery modules, thereby lengthening the lifespan of the battery.

In addition, the present disclosure may minimize a risk of leakage of coolant into the interior of the battery cell module assembly in a vehicle accident situation, thereby preventing generation of fire.

In addition, the present disclosure may reduce assembly costs and a quality risk when double-sided cooling type cooling flow passages are assembled.

In addition, the present disclosure may not employ an additional part for connection of a cooling flow passage in the battery cell module assembly, thereby enhancing part disposition efficiency.

Furthermore, the battery cell module assembly of the present disclosure has a double watertight sealing structure and, as such, a part may also be disposed over and connected to the upper coolant flow passage. Accordingly, a space may be efficiently utilized.

Effects attainable in the present disclosure are not limited to the above-described effects, and other effects of the present disclosure not yet described will be more clearly understood by those skilled in the art from the following description.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a perspective view showing an embodiment of a battery cell module assembly of the present disclosure;
FIG. 2 is a view showing a single-sided cooling system of the battery cell module assembly;
FIGs. 3 and 4 are horizontal sectional views showing a double-sided cooling system of the battery cell module assembly;
FIGs. 5 and 6 are sectional views showing an embodiment of the battery cell module assembly according to the present disclosure;
FIG. 7 is a perspective view taken along line A-A in FIG. 1;
FIG. 8 is an exploded perspective view showing an embodiment of the battery cell module assembly of the present disclosure;
FIG. 9 is a sectional view explaining an assembly method for an embodiment of the battery cell module assembly according to the present disclosure;
FIG. 10 is an exploded perspective view showing another embodiment of the battery cell module assembly of the present disclosure; and
FIG. 11 is a sectional view explaining an assembly method for another embodiment of the battery cell module assembly according to the present disclosure.

### DETAILED DESCRIPTION

Hereinafter, various embodiments disclosed in the present disclosure will be described in detail with reference to the accompanying drawings, and the same or similar elements are designated by the same reference numerals regardless of the numerals in the drawings and redundant description thereof will be omitted. The suffixes "module" and "unit" of elements herein are used for convenience of description and thus can be used interchangeably and do not have any distinguishable meanings or functions.

In the following description of the embodiments of the present disclosure, a detailed description of known technologies incorporated herein will be omitted when it may obscure the subject matter of the embodiments of the present disclosure. In addition, the embodiments of the present disclosure will be more clearly understood from the accompanying drawings and should not be limited by the accompanying drawings, and it is to be appreciated that all changes, equivalents, and substitutes that do not depart from the spirit and technical scope of the present disclosure are encompassed in the present disclosure.

It will be understood that, although the terms "first", "second", etc. may be used herein to describe various elements, these elements should not be limited by these terms. These terms are only used to distinguish one element from another.

In the case where an element is "connected" or "linked" to another element, it should be understood that the element may be directly connected or linked to the other element, or another element may be present therebetween. Conversely, in the case where an element is "directly connected" or "directly linked" to another element, it should be understood that no other element is present therebetween.

Unless clearly used otherwise, singular expressions include a plural meaning.

In this specification, the term "comprising", "including", or the like, is intended to express the existence of the characteristic, the numeral, the step, the operation, the element, the part, or the combination thereof, and does not exclude another characteristic, numeral, step, operation, element, part, or any combination thereof, or any addition thereto.

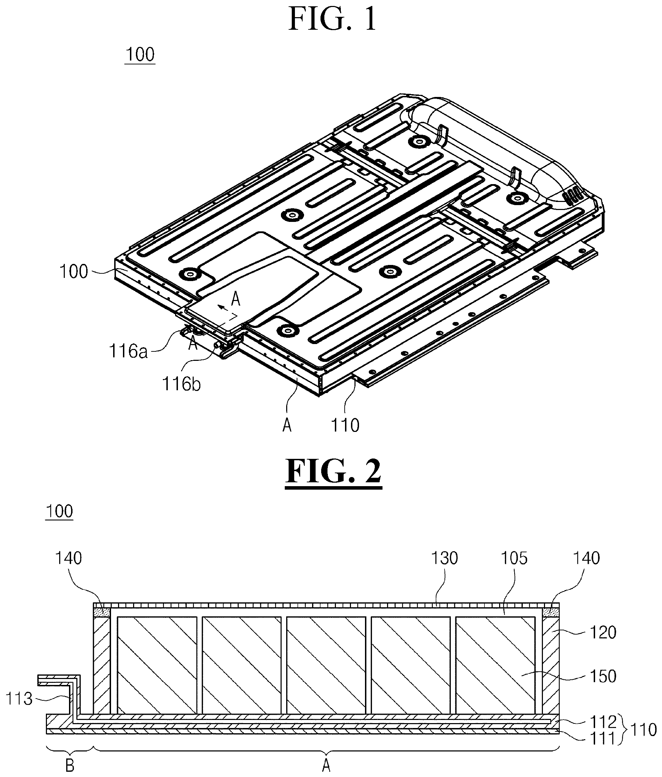

FIG. 1 is a perspective view showing an embodiment of a battery cell module assembly 100 of the present disclosure. The battery cell module assembly 100 according to an aspect of the present disclosure may include a case 110-120-130 configured to enable a battery module 150 including a plurality of battery cells to be seated therein and to be sealed (watertight-sealed) in order to prevent foreign matter from being introduced into an interior thereof. The battery cells may be mounted in the interior of the case 110-120-130 in a cell-to-pack manner without being bound in the form of a battery module.

As shown in FIG. 1, the battery cell module assembly 100 may be configured to have a flat shape and may be disposed at a lower portion of a vehicle. Since a large amount of heat is generated at the battery module 150, the battery cell module assembly 100 may be formed to have a large surface area and, as such, may enhance heat dissipation efficiency.

The case of the battery cell module assembly 100 may be constituted by a lower case 110 constituting a lower surface, a side case 120 constituting a side surface, and an upper case 130 constituting an upper surface, and the side case 120 and the lower case 110 may be previously configured to have an integrated structure through welding.

The upper case 130 may be coupled to an upper end of the side case 120 in a state in which the battery module 150 has been mounted. It may be necessary to separate the upper case 130, for maintenance and repair of the battery cell module assembly 100 in future, and, as such, the upper case 130 may be fastened in a sealing manner without using a welding manner which prevents separation of the upper case 130.

A sealing part 140 may be disposed between the upper case 130 and the side case 120 to seal an inside thereof, thereby preventing foreign matter such as moisture or the like from being introduced into the inside thereof. The sealing part 140 may be disposed along an edge portion of the upper case 130.

FIG. 2 is a view showing a single-sided cooling system of the battery cell module assembly 100. The battery cell module assembly 100 may include a lower cooling flow passage 112 at the lower case 110 in order to dissipate heat generated at a plurality of battery modules 150. The lower case 110 may further include a lower cover 111 configured to protect the lower cooling flow passage 112. Coolant may be supplied to the lower cooling flow passage 112 to dissipate heat generated at the battery cells.

A lower coolant tube 115, which is configured to supply coolant to the lower cooling flow passage 112, is connected to the lower cooling flow passage 112. The lower coolant tube 115 may include a pair of ports 116, that is, an inlet 116a and an outlet 116b.

As shown in FIGs. 1 and 2, the lower coolant tube 115 has a pipe shape, and a connection portion thereof to the lower cooling flow passage 112 may be weak. In particular, when impact is generated due to a vehicle accident, connection portions between the lower cooling flow passage 112 and the lower coolant tube 115 may be separated from each other and, as such, the coolant may leak.

To this end, it is preferred that the connection portions of the lower cooling flow passage 112 and the lower coolant tube 115 be positioned outside a cell area A in which the battery module 150 is mounted. Accordingly, the lower case 110 may include the cell area A surrounded by the side case 120, and a tube area B disposed outside the side case 120. The tube area B is disposed in a state of being partitioned from the cell area A and, as such, the battery module 150 is not contaminated by coolant even when the lower coolant tube 115 is broken.

In plan view, the cell area A is configured to have a quadrangular shape, and the tube area B is configured to have a shape protruding from one side of the cell area A. However, the lower case 110 may be configured to have a quadrangular shape, and a portion of the side case 120 may be inwardly recessed to provide a concave tube area B.

The cell area A is an area surrounded by the side case 120, and the tube area B is disposed at one side of the cell area A without being surrounded by the side case 120 and is not limited to a protruding shape.

Since it is difficult to obtain a sufficient heat dissipation effect using only the lower cooling flow passage 112, the battery cell module assembly 100 still suffers from overheating. Although addition of heat dissipation fins or extension of the cooling flow passage may be applied, enhancement in heat dissipation efficiency is slight in this case. To this end, an additional heat dissipation structure is required.

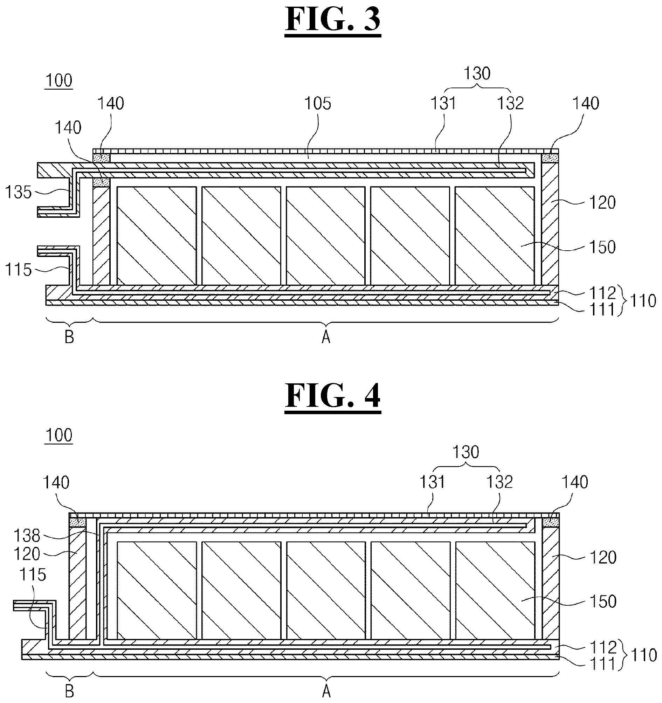

FIGs. 3 and 4 are horizontal sectional views showing a double-sided cooling system of the battery cell module assembly 100. In order to more effectively enhance heat dissipation efficiency, an upper cooling flow passage 132 may also be added to the upper case 130.

Since the lower case 110 is configured to be integrated with the side case 120 as the lower case 110 is coupled to the side case 120 through welding, there is no difficulty in forming, at the lower cooling flow passage 112, the tube area B disposed outside the side case 120. However, the upper case 130 includes the sealing part 140 configured to seal the cell area A and, as such, there is a difficulty in forming a structure for connecting the upper cooling flow passage 132 to an upper coolant tube 135.

As shown in FIG. 3, when the upper cooling flow passage 132 protrudes from the cell area A to constitute the tube area B, the periphery of a protruding portion of the upper cooling flow passage 132 should be sealed. In this case, the sealing part 140 should be configured to have a shape surrounding the periphery of the upper cooling flow passage 132 at a boundary between the tube area B and the cell area A.

When the sealing part 140 is configured not to have a flat shape, but to have a three-dimensional shape through extension thereof in a vertical direction, it is difficult to secure quality management in association with sealant coating and assembly and there may be a problem associated with reliability of the sealing part 140. For reliability of the sealing part 140, an inner tube 138 configured to interconnect the lower cooling flow passage 112 and the upper cooling flow passage 132 may be formed in the cell area A and, as such, the outwardly-exposed upper coolant tube 135 may be omitted. The inner tube 138 is disposed in the cell area A and, as such, there is an advantage in that it is unnecessary to vary the shape of the sealing part 140.

However, the inner tube 138 disposed in the cell area A is broken or connection portions between the inner tube 138 and the upper and lower cooling flow passages 132 and 112 are broken, insulation of the battery module 150 may be damaged by the coolant. Furthermore, there is a problem in that disposition of the inner tube 138 and connection of the inner tube 138 to the lower cooling flow passage 112 may be more difficult in the cell area A than in the tube area B.

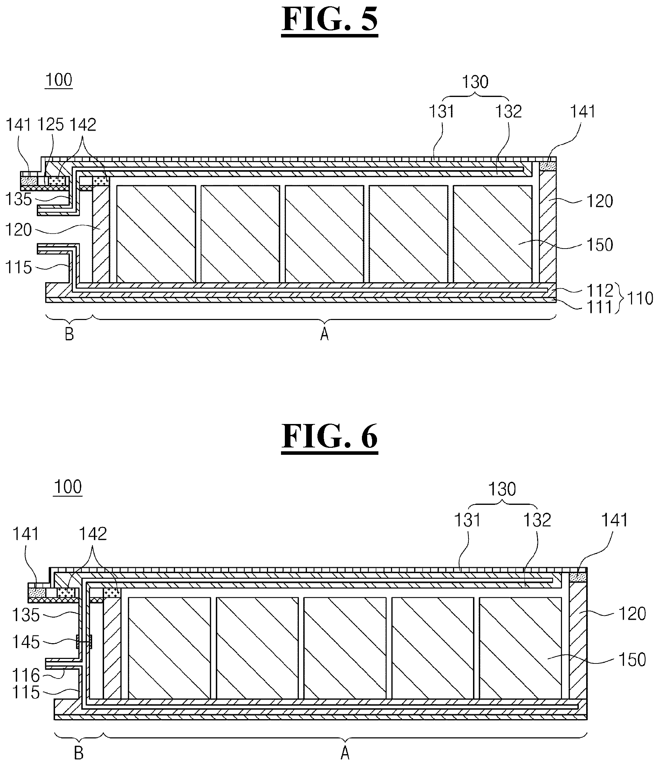

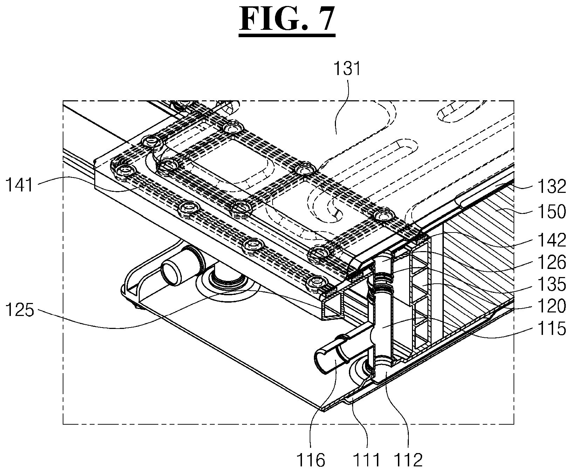

To this end, the present disclosure may provide a method of implementing an upper cooling flow passage 132 enabling the sealing part 140 to be configured to have a flat shape. FIGs. 5 and 6 are sectional views showing an embodiment of the battery cell module assembly 100 according to the present disclosure. FIG. 7 is a perspective view taken along line A-A in FIG. 1.

As shown in FIGs. 5 and 6, the upper case 130 may include a tube area B extending from the cell area A. The tube area B of the upper case 130 may be configured to be symmetrical with the tube area B of the lower case 11 such that the tube area B of the upper case 130 faces the tube area B of the lower case 11.

The upper coolant tube 135, which is connected to the upper cooling flow passage 132, may be connected to a lower end of a tube portion of the upper cooling flow passage 132 in the tube area B. As shown in FIGs. 5 and 6, the upper coolant tube 135 and the lower coolant tube 115 may be disposed between the tube area B of the upper case 130 and the tube area B of the lower case 110.

The upper coolant tube 135 and the lower coolant tube 115 may be independently configured, as shown in FIG. 5, or may be interconnected for enhanced efficiency, as shown in FIG. 6. In the latter case, a tube-shaped tube sealing part 145 configured to seal the connection portions of the upper coolant tube 135 and the lower coolant tube 115 may be further provided.

Referring to FIG. 5, the side case 120 may include an extension part 125 configured to support the tube area B of the upper case 130. The extension part 125 extends from an upper end of the side case 120 surrounding the cell area A while being spaced apart from the lower case 110.

Since the extension part 125 is added to the side case 120, a sealing part may also be configured to have a shape extending along a periphery of the extension part 125. Although a space surrounded by the sealing part should be sealed, it is impossible to maintain the space in a sealed state due to a tube hole 126 formed at the extension part 125 to allow the upper coolant tube 135 connected to the upper cooling flow passage 132 to extend therethrough, as shown in FIGs. 5 to 7.

To this end, the present disclosure further includes an additional sealing part 142 disposed at a periphery of the tube hole 126 to maintain a sealed state. In the following description, the sealing part disposed at the periphery of the upper case 130 will be referred to as a "first sealing part 141", and the sealing part disposed at the periphery of the tube hole 126 will be referred to as a "second sealing part 142".

Although the tube hole 126 has a circular shape, the second sealing part 142 may be formed to have a quadrangular shape, as shown in FIG. 7. For connection of a pair of upper coolant tubes 135, two tube holes 126 may be provided. In this case, the second sealing part 142 may be divided into two portions, as shown in FIG. 7. Alternatively, the second sealing part 142 may be configured to have a shape simultaneously surrounding the two tube holes 126. Of course, this configuration may also fall within the scope of the present disclosure.

An inner space surrounded by the second sealing part 142 is partitioned from a space between the first sealing part 141 and the second sealing part 142 and, as such, a sealed state of the cell area A may be maintained. In particular, even when connection portions of the upper coolant tube 135 and the upper cooling flow passage 132 are broken, the second sealing part 142 may prevent introduction of coolant into the cell area A.

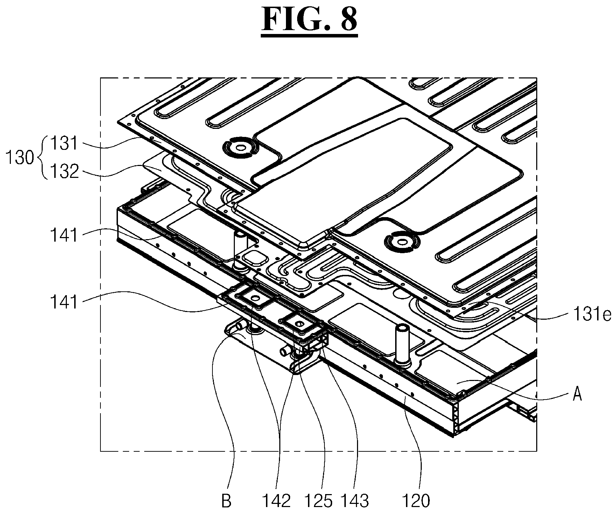

FIG. 8 is an exploded perspective view showing an embodiment of the battery cell module assembly 100 of the present disclosure. In this embodiment, the upper case 130 further includes an upper cover 131 configured to cover the upper cooling flow passage 132, and the upper cover 131 may be constituted by a member separate from the upper cooling flow passage 132, as shown in FIG. 8.

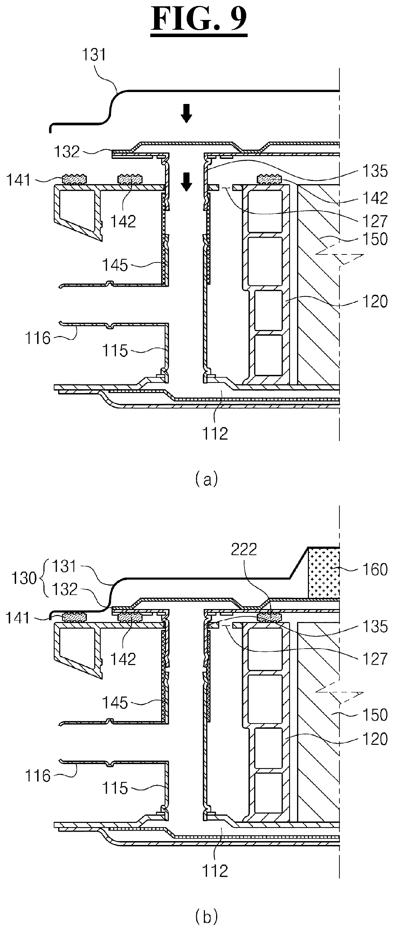

A space disposed between the upper cover 131 and the upper cooling flow passage 132 may be utilized to mount an electronic part 160 (see FIG. 9) such as a control part or the like used in the battery cell module assembly 100. The mounting space of the battery cell module assembly 100 may be more efficiently utilized through the upper cover 131.

When a step is formed between a surface contacting an upper portion of the sealing part and a surface contacting a lower portion of the sealing part, a gap may be generated and, as such, reliability of sealing may be degraded. To this end, the upper cover 131 includes an edge part 131e disposed around a lower surface of the upper cover 131 without formation of a step. Accordingly, the first sealing part 141 may be disposed along the edge part 131e of the upper cover 131, and the second sealing part 142 may be disposed around the connection portions of the upper cooling flow passage 132 and the upper coolant tube 135.

That is, the first sealing part 141 may be disposed between the side case 120 and the upper cover 131, and the second sealing part 142 may be disposed between the side case 120 and the upper cooling flow passage 132.

The first sealing part 141 and the second sealing part 142 may be independently configured, or may be interconnected, as shown in FIG. 8. A connecting sealing part 143 partitions the tube area B and the cell area A from each other, thereby obtaining a double sealing effect.

FIG. 9 is a sectional view explaining an assembly method for an embodiment of the battery cell module assembly 100 according to the present disclosure. FIG. 9 shows a procedure for interconnecting the upper coolant tube 135 and the lower coolant tube 115 in the battery cell module assembly 100 of FIG. 8.

As shown in FIG. 9(a), the upper coolant tube 135 may be configured to be integrally coupled to a lower portion of the upper cooling flow passage 132 in the tube area B, and the lower coolant tube 115 may be configured to be integrated with the lower coolant flow passage 112 while extending from an upper portion of the lower cooling flow passage 112.

As shown in FIG. 9, the upper coolant tube 135 may be connected to the lower coolant tube 115 such that the upper coolant tube 135 shares the port 116 of the lower coolant tube 115 with the lower coolant tube 115, as shown in FIG. 6.

For watertight sealing of the upper coolant tube 135 and the lower coolant tube 115, a tube sealing part 145 may be fitted around the lower coolant tube 115, and the upper coolant tube 135 may be inserted into the tube sealing part 145. Referring to an assembled state of FIG. 9(b), it can be seen that the upper coolant tube 135 and the lower coolant tube 115 do not overlap each other. Of course, the upper coolant tube 135 and the lower coolant tube 115 may partially overlap each other.

The tube sealing part 145 may be configured to be shrunk, in a state in which the upper case 130 is coupled to an upper portion of the side case 120, such that the tube sealing part 145 is brought into tight contact with the upper coolant tube 135 and the lower coolant tube 115.

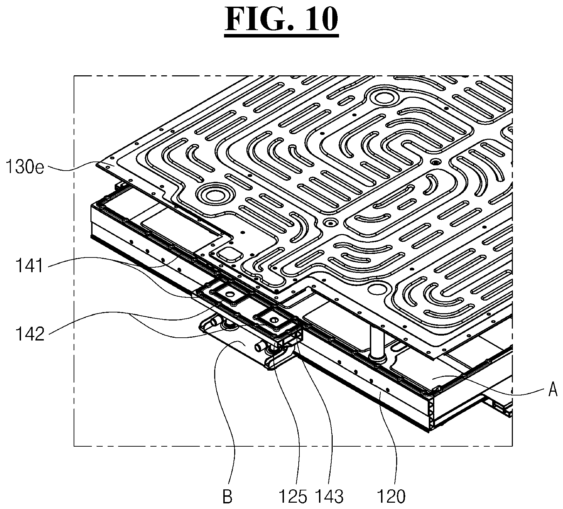

FIG. 10 is an exploded perspective view showing another embodiment of the battery cell module assembly 100 of the present disclosure. In this case, the upper cooling flow passage 132 extends to the upper portion of the side case 120 such that the upper cooling flow passage 132 constitutes an integrated upper case 130 under the condition that a separate upper cover 132 is not provided at the upper case 130. The upper cooling flow passage 132 may contact the first sealing part 141 at an edge part 130e disposed at the periphery of the upper case 130.

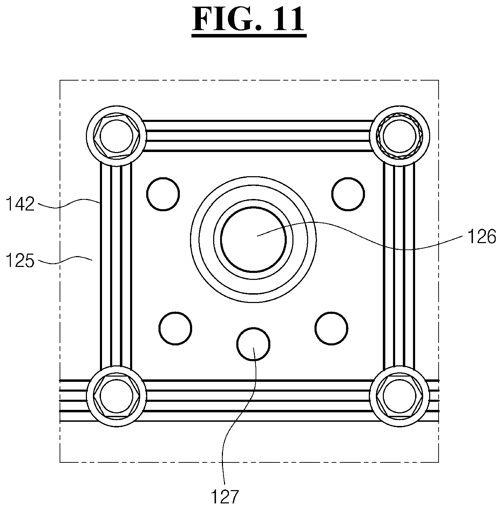

FIG. 11 is a plan view showing the extension part 125 of the battery cell module assembly 100 of the present disclosure. The extension part 125 of the battery cell module assembly 100 of the present disclosure includes the tube hole 126 and, as such, an area surrounded by the second sealing part 142 may communicate with the outside. Since moisture may be introduced into an inside of the second sealing part 142, condensate may be formed on the upper coolant tube 153 or the upper cooling flow passage 132 due to coldness of coolant.

In order to prevent condensate from stagnating on an upper surface of the extension part 125, condensate discharge holes 127 may be formed between the inside of the second sealing part 142 and the tube hole 126. The size, shape, and number of the condensate discharge holes 127 are not limited to those of FIG. 11.

A heat exchanger (not shown) may be connected to the lower coolant tube 115 and the upper coolant tube 135, and a controller (e.g., a processor) may be configured to control coolant flow in the heat exchanger, the lower cooling flow passage 112 and the upper cooling flow passage 132 to control temperature deviation among the one or more battery modules 150.

As apparent from the above description, the battery cell module assembly 100 of the present disclosure may reduce a temperature deviation among battery modules 150, thereby lengthening the lifespan of the battery.

In addition, the present disclosure may minimize a risk of leakage of coolant into the interior of the battery cell module assembly in a vehicle accident situation, thereby preventing generation of fire.

In addition, the present disclosure may reduce assembly costs and a quality risk when double-sided cooling type cooling flow passages are assembled.

In addition, the present disclosure may not employ an additional part for connection of a cooling flow passage in the battery cell module assembly, thereby enhancing part disposition efficiency.

Furthermore, the battery cell module assembly of the present disclosure has a double watertight sealing structure and, as such, a part may also be disposed over and connected to the upper coolant flow passage 132. Accordingly, a space may be efficiently utilized.

## Claims

1. A battery cell module assembly comprising:
a lower case comprising a lower cooling flow passage;
a plurality of battery modules seated in a cell area of the lower case;
a side case disposed along a periphery of the cell area and coupled to the lower case;
an upper case configured to cover the plurality of battery modules and an upper surface of the side case, the upper case comprising an upper cooling flow passage;
a lower coolant tube connected to the lower cooling flow passage over a tube area of the lower case disposed outside the side case; and
an upper coolant tube connected to the upper cooling flow passage under a tube area of the upper case disposed outside the side case,
wherein coolant flows through the lower cooling flow passage and the upper cooling flow passage to control a temperature deviation in the plurality of battery modules.

2. The battery cell module assembly according to claim 1, further comprising:
a first sealing part disposed between the upper case and the side case and configured to seal the cell area; and
a second sealing part disposed between the upper case and the side case while being disposed at a periphery of the upper coolant tube.

3. The battery cell module assembly according to claim 2, wherein the side case comprises:
an extension part extending to support a lower portion of the tube area of the upper case; and
a tube hole formed at the extension part and configured to enable the upper coolant tube to pass therethrough, and
wherein the second sealing part is disposed at a periphery of the tube hole.

4. The battery cell module assembly according to claim 3, wherein the extension part comprises a condensate discharge hole formed between the tube hole and the second sealing part.

5. The battery cell module assembly according to one of claims 2 to 4,
wherein the upper case comprises an edge part flush with a lower surface thereof without forming a step, and
wherein the first sealing part contacts the edge part of the upper case.

6. The battery cell module assembly according to one of claims 2 to 5,
wherein the upper case comprises an upper cover configured to cover an upper portion of the upper cooling flow passage,
wherein the first sealing part is disposed between the upper cover and the side case, and
wherein the second sealing part is disposed between the upper cooling flow passage and the side case.

7. The battery cell module assembly according to claim 6,
wherein the upper case comprises an upper electronic part disposed between the upper cooling flow passage and the upper cover, and
wherein the upper case comprises a control part mounted at the electronic part.

8. The battery cell module assembly according to one of claims 2 to 7, further comprising:
a connecting sealing part configured to interconnect the first sealing part and the second sealing part.

9. The battery cell module assembly according to one of claims 1 to 8,
wherein the upper coolant tube is connected to the lower coolant tube, and
wherein the battery cell module assembly further comprises a tube sealing part configured to seal connection portions of the upper coolant tube and the lower coolant tube.

10. The battery cell module assembly according to one of claims 1 to 9, wherein the tube area of the upper case and the tube area of the lower case are disposed to face each other in a vertical direction.

11. The battery cell module assembly according to one of claims 1 to 10, wherein the tube area of the lower case protrudes from the cell area.

12. The battery cell module assembly according to one of claims 1 to 11, further comprising:
a heat exchanger connected to the lower coolant tube and the upper coolant tube; and
a controller configured to control coolant flow in the heat exchanger, the lower cooling flow passage and the upper cooling flow passage to control a temperature deviation among the one or more battery modules.
